# FASCICULE DE BREVET EUROPEEN

(11) **EP 0 434 479 B1**
(45) Date de publication et mention de la délivrance du brevet: **02.02.1994**
(21) Numéro de dépôt: 90403210.9
(22) Date de dépôt: 13.11.1990
(51) Int. Cl.: B60T 13/569

(54) **Dispositif de protection périphérique**
Aeussere Schutzvorrichtung
Outer protection device

(30) Priorité: 22.12.1989 FR 8917045
(43) Date de publication de la demande: 26.06.1991
(73) Titulaire: ALLIEDSIGNAL EUROPE SERVICES TECHNIQUES, 93700 Drancy (FR)
(72) Inventeur: Gautier, Jean-Pierre, Bendix Europe Services Tech., F-93700 Drancy (FR); Debuire, André, Bendix Europe Services Tech., F-93700 Drancy (FR)
(74) Mandataire: Bentz, Jean-Paul

(56) Documents cités:
- EP-A- 0 072 602
- EP-A- 0 300 857
- DE-A- 3 103 999
- FR-A- 2 540 810
- GB-A- 2 136 520

## Description

La présente invention concerne un dispositif de protection périphérique de deux pièces métalliques emboîtées l'une dans l'autre affectant une forme générale de flasque dont la première présente un rebord s'étendant vers l'extérieur et la seconde une zone marginale dont une première partie affecte sensiblement la forme d'une lettre majuscule S dont l'axe vertical est sensiblement parallèle au rebord et une deuxième partie sensiblement perpendiculaire au rebord.

Ces pièces métalliques sont, par exemple, celles utilisées pour réaliser un servomoteur à dépression généralement mis en oeuvre pour l'assistance au freinage de véhicules automobiles.

Les documents EP-A-0 072 602 et EP-A-0 300 857 décrivent de tels servomoteurs, assemblés par emboutissage.

Le document GB-A-2 136 520, par exemple, décrit également un tel servomoteur assemblé à l'aide d'un anneau métallique pressant l'un contre l'autre des rebords formés à la périphérie des flasques formant le servomoteur.

La place réservée au servomoteur dans le véhicule ainsi équipé est souvent très réduite, et des faisceaux de câbles électriques peuvent être disposés en son voisinage immédiat.

Dans ce cas, les vibrations inhérentes au véhicule peuvent induire une usure des câbles et, par suite, provoquer la mise à nu d'une âme conductrice présentant une tension électrique différente de celle du servomoteur. Il est alors nécessaire d'équiper le servomoteur d'un dispositif de protection tendant à éviter une telle usure.

Dans ce cas, l'homme du métier dispose généralement un film isolant par collage sur la partie correspondante du servomoteur. Toutefois, un tel film présente l'inconvénient de mal vieillir du fait de son environnement et de se décoller rapidement.

La présente invention a pour but d'obvier à cet inconvénient.

Selon l'invention, le dispositif de protection est constitué d'un arc affectant en coupe la forme générale de la lettre majuscule C venant emboîter le rebord et la zone marginale, la branche supérieure du C étant logée entre la paroi de la première pièce métallique et la deuxième partie de la seconde pièce métallique, tandis que la branche inférieure est reçue dans la partie creuse de la première partie de la zone marginale.

De préférence, la distance entre les extrémités des branches supérieure et inférieure du C est sensiblement égale à celle entre la partie creuse et le rebord et inférieure à la longueur de la deuxième partie.

L'invention sera mieux comprise et d'autres buts, avantages et caractéristiques apparaîtront plus clairement à la lecture de la description qui suit d'un mode de réalisation préféré donné à titre non limitatif et à laquelle une planche de dessins est annexée sur laquelle :

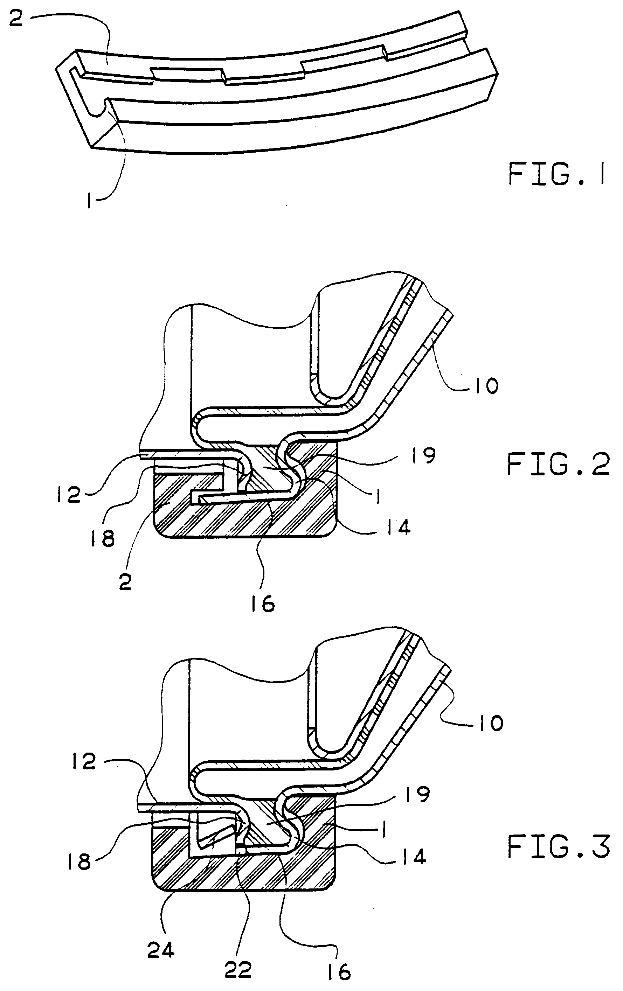

- la Figure 1 représente schématiquement en perspective un dispositif selon l'invention,
- la Figure 2 représente schématiquement le dispositif selon l'invention disposé sur un servomoteur, en coupe axiale selon un plan où les deux pièces ne sont pas serties et,
- la Figure 3 est identique à la Figure 2 sauf en ce que la coupe axiale est réalisée selon un plan où les deux pièces sont serties.

En référence aux Figures maintenant, le boîtier du servomoteur est constitué de deux pièces métalliques 10, 12 en forme de flasque. La première pièce 12 présente un rebord 18 s'étendant vers l'extérieur. La seconde pièce 10 comporte une zone marginale dont une première partie 14 affecte sensiblement la forme de la lettre S dont l'axe vertical est sensiblement parallèle au rebord précité 18, et une seconde partie 16 sensiblement perpendiculaire au rebord 18. Un joint déformable 19 est enfermé entre le rebord 18 et la partie 14 en S.

Les deux pièces sont serties ensemble par déformation ou emboutissage d'une zone 24 proche d'une pluralité correspondante de lumières 22 pratiquées dans la seconde partie 16.

Le dispositif de protection selon l'invention affecte en coupe perpendiculaire à l'axe la forme d'un arc et en coupe axiale la forme générale d'un C majuscule présentant une branche supérieure 2 et une branche inférieure 1.

Le dispositif vient emboîter le rebord 18 et la zone marginale 14, 16. Pour ce faire, la branche supérieure 2 se loge dans l'espace ménagé entre la paroi de la pièce 12 et l'extrémité de la partie 16 de la pièce 10, tandis que la branche inférieure 1 est reçue dans la partie creuse de la partie 14 de la zone marginale.

La distance entre les extrémités des branches supérieure et inférieure du C est très légèrement supérieure à celle entre la partie creuse et le rebord et inférieure à la longueur de la deuxième partie.

De préférence, la branche supérieure 2 du C est ôtée en regard des zones déformées 24.

De préférence également, le dispositif de protection est réalisé en un matériau électriquement isolant et élastique, tel le caoutchouc.

On obtient ainsi un dispositif de protection fiable qui n'est déformé que lors de sa mise en place, et ne présentant aucune déformation après.

De préférence, un tel dispositif mesure entre 20 et 90° d'angle en suivant la circonférence du flasque et, de préférence 45°.

L'homme du métier pourra apporter de nombreuses modifications au dispositif selon l'invention. Par exemple, il pourra être équipé d'un moyen permettant d'y fixer des câbles électriques.

## Revendications

1. Dispositif de protection périphérique de deux pièces métalliques (10, 12) emboîtées l'une dans l'autre affectant une forme générale de flasque dont la première (12) présente un rebord (18) s'étendant vers l'extérieur et la seconde (10) une zone marginale dont une première partie (14) affecte sensiblement la forme d'une lettre majuscule S dont l'axe vertical est sensiblement parallèle audit rebord (18) et une deuxième partie (16) sensiblement perpendiculaire audit rebord (18), caractérisé en ce qu'il est constitué d'un arc affectant en coupe la forme générale de la lettre majuscule C venant emboîter ledit rebord (18) et ladite zone marginale, la branche supérieure (2) du C étant logée entre la paroi de la première pièce métallique (12) et ladite deuxième partie (16) de la seconde pièce métallique (10), tandis que la branche inférieure (1) est reçue dans la partie creuse de la première partie (14) de la zone marginale.

2. Dispositif de protection selon la revendication 1, caractérisé en ce que la distance entre les extrémités des branches supérieure et inférieure (1, 2) du C est sensiblement égale à celle entre ladite partie creuse (14) et ledit rebord (18) et inférieure à la longueur de ladite deuxième partie (16).

3. Dispositif de protection selon l'une quelconque des revendications précédentes, caractérisé en ce que lesdites pièces métalliques étant serties ensemble par déformation de certaines zones (24), la branche supérieure (2) du C est ôtée en regard desdites zones (24).

4. Dispositif de protection selon l'une quelconque des revendications précédentes, caractérisé en ce qu'il mesure entre 20° et 90° d'angle en suivant la circonférence du flasque.

5. Dispositif de protection selon l'une quelconque des revendications précédentes caractérisé en ce qu'il est réalisé en un matériau élastique électriquement isolant.

6. Dispositif de protection selon la revendication 5, caractérisé en ce que ledit matériau est un caoutchouc.

## Patentansprüche

1. Umfangsschutzvorrichtung aus zwei Metallelementen (10, 12), die ineinander eingesetzt sind, im wesentlichen die Form eines Flansches aufweisen und von denen das erste Metallelement (12) einen sich nach außen erstreckenden Rand (18) und das zweite Metallelement (10) einen Randbereich aufweist, dessen erster Abschnitt (14) im wesentlichen die Form des großen Buchstabens S mit im wesentlichen parallel zum Rand (18) angeordneter vertikaler Achse hat und dessen zweiter Abschnitt (16) im wesentlichen senkrecht zum Rand (18) angeordnet ist, dadurch gekennzeichnet, daß die Schutzvorrichtung aus einem Bogen gebildet ist, der im Schnitt allgemein die Form des großen Buchstabens C aufweist und den Rand (18) und den Randbereich ineinanderdrückt, wobei der obere Schenkel (2) des C zwischen der Wand des ersten Metallelements (12) und dem zweiten Abschnitt (16) des zweiten Metallelements (10) liegt, während der untere Schenkel (1) im eingezogenen Abschnitt des ersten Abschnittes (14) des Randbereichs aufgenommen ist.

2. Schutzvorrichtung nach Anspruch 1, dadurch gekennzeichnet, daß der Abstand zwischen den Enden des oberen und des unteren Schenkels (1, 2) des C im wesentlichen gleich dem Abstand zwischen dem eingezogenen Abschnitt (14) und dem Rand (18) und kleiner als die Länge des zweiten Abschnittes (16) ist.

3. Schutzvorrichtung nach einem der vorhergehenden Ansprüche, dadurch gekennzeichnet, daß, nachdem die Metallelemente durch Verformen von einigen Zonen (24) ineinandergefalzt sind, der obere Schenkel (2) des C gegenüber von diesen Zonen (24) entfernt ist.

4. Schutzvorrichtung nach einem der vorhergehenden Ansprüche, dadurch gekennzeichnet, daß sie sich in einem Winkelbereich zwischen 20° und 90° entlang des Umfangs erstreckt.

5. Schutzvorrichtung nach einem der vorhergehenden Ansprüche, dadurch gekennzeichnet, daß sie aus einem elastischen, elektrisch isolierenden Material hergestellt ist.

6. Schutzvorrichtung nach Anspruch 5, dadurch gekennzeichnet, daß das Material ein Kautschuk ist.

## Claims

1. Peripheral protection device with two metal pieces (10, 12) fitted into one another and having a general flange shape, the first (12) of which has an edge (18) extending outwards and the second (10) of which has a marginal zone, a first part (14) of which has substantially the form of a capital S whose vertical axis is substantially parallel to said edge (18) and a second part (16) of which is substantially perpendicular to said edge (18), characterized in that it consists of an arc having, in section, the general form of the capital letter C enclosing said edge (18) and said marginal zone, the upper arm (2) of the C being housed between the wall of the first metal piece (12) and said second part (16) of the second metal piece (10), while the lower arm (1) is received in the hollow part of the first part (14) of the marginal zone.

2. Protection device according to Claim 1, characterized in that the distance between the ends of the upper.and lower arms (1, 2) of the C is substantially equal to that between said hollow part (14) and said edge (18) and less than the length of said second part (16).

3. Protection device according to any one of the preceding claims, characterized in that, since said metal pieces are crimped together by deformation of certain zones (24), the upper arm (2) of the C is removed opposite said zones (24).

4. Protection device according to any one of the preceding claims, characterized in that it measures between 20° and 90° of angle according to the circumference of the flange.

5. Protection device according to any one of the preceding claims, characterized in that it is made from an electrically insulating resilient material.

6. Protection device according to Claim 5, characterized in that said material is a rubber.
